# EUROPEAN PATENT SPECIFICATION

(11) **EP 3 684 737 B1**
(45) Date of publication and mention of the grant of the patent: **22.11.2023**
(21) Application number: 17754779.1
(22) Date of filing: 28.07.2017
(51) Int. Cl.: C03B 17/02, C03C 27/06, C03B 23/207, A44C 17/04, C03C 27/00

(54) **METHOD AND DEVICE FOR INTEGRATION OF GEMSTONES IN GLASS ATTIRE**
VERFAHREN UND VORRICHTUNG ZUR INTEGRATION VON EDELSTEINEN IN GLASKLEIDUNG
PROCÉDÉ ET DISPOSITIF D'INTÉGRATION DE PIERRES PRÉCIEUSES DANS UNE PARURE EN VERRE

(43) Date of publication of application: 29.07.2020
(73) Proprietor: Schenk, Natascha, 8401 Kalsdorf (AT)
(72) Inventor: Schenk, Natascha, 8401 Kalsdorf (AT)
(74) Representative: Nemec, Harald
(86) International application number: PCT/IB2017/000890
(87) International publication number: WO 2018/185518

(56) References cited:
- WO-A1-2006/128208
- FR-A- 641 049
- US-A- 5 271 132

## Description

### FIELD OF THE INVENTION

The present invention relates to methods and apparatuses of producing jewelry and more exactly to encasing gemstones, particularly diamonds in glass to enhance their appearance in terms of size and reflectivity.

### BACKGROUND OF THE INVENTION

For to underline reflection and light breaking abilities of Gemstones these need to be a little distant from the surface of the wearer and allow lighting not only frontally, but also incidence of light from the sides.

Goldsmith can take this into consideration and place the most brilliant gems on top of crowns or with utmost sparse skirting.

Even more effective is to encase gems in a glass ball or tear, whereon the glass attire also enlarges the gem optically.

### PROBLEM

However, this is not an easy task. Hitherto for this purpose heated gems are dropped into a half-molten glass tube, which is then further heated up by gas flames to completely melt and therewith close the tube to form a ball or a tear-shaped glass encasing.

The problem thereby is, that the optical effect is only strong, as long as the gem is on all sides closely encompassed by the glass without leaving voids and that the axis of the cut and polished stone would be perfectly vertical.

This however cannot be provided by a randomly dropped gem into a glass tube, as done contemporarily, which results in varying qualities of the product and a high rate of waste.

### PRIOR ART

Two relevant patents had been found, that cover the idea of melting objects in glass: US 6.060.011 proposes to encase the object in a low-melting glass substrate and to cure it in the encapsulation mass.

Whereas this method has the advantage of use in a production line and therefore high productivity, the results of melting glass substrates and the self-forming of spheres or tears just by capillary tension leads to quite random forms and results. When it comes to encapsulation of precious gems, the waste of it would be intolerable.

US 2011/0030422 A1 provides the method of mounting the jewel in a mold, injecting molten glass, cooling and demolding it and then polishing the object.

The process of demolding without traces on the glass surface is critical and thus polishing is cumbersome. Moreover, the exact positioning of the encased object hitherto was only possible by means of some kind of frame or base, that either is left as holder for necklace, bracelets or the like - what may leave voids in the encasement - or has to be removed and even enlarges the polishing job to be done.

US 5 271 132 A and FR 641 049 A show devices for picking up stones by means of vacuum and placing the stones onto a pre-formed setting.

### TASK OF THE INVENTION

It is therefore task of the here disclosed invention to find a method and an apparatus within the hereditary gaffer kind of procedure of injecting the gems so that they are perfectly positioned. However, quite a few essays to inject them with tweezers or forceps have failed to provide a reliable result.

### SOLUTION

The inventive step and apparatus therefore were found after quite a few attempts to place the gemstone exactly vertically into the bottom of the semi-molten glass tube by applying a particular vacuum tweezer technique, wherein a canula is equipped with an end piece that is embossed with a negative section of the relevant shape of the applied gemstone and therefore, with applied vacuum suction, would hold the gem perfectly straight.

Moreover, the canula is equipped with heat-resisting guiding means for the glass tube, either concentric metal spirals, or clips of highly heat-resisting plastics, as e.g. PTFE.

Thereby the length of the canula needs to be just a little shorter than the depth of the glass tube, minus the size of the gem, thus, when inserted to the hilt of a guiding cone, the gem would be perfectly in place.

There might be an opening valve on that cone, that releases the vacuum as soon as the adequate depth is reached, so to place the gem without delay.

### DESCRIPTION ALONG TO THE DRAWINGS

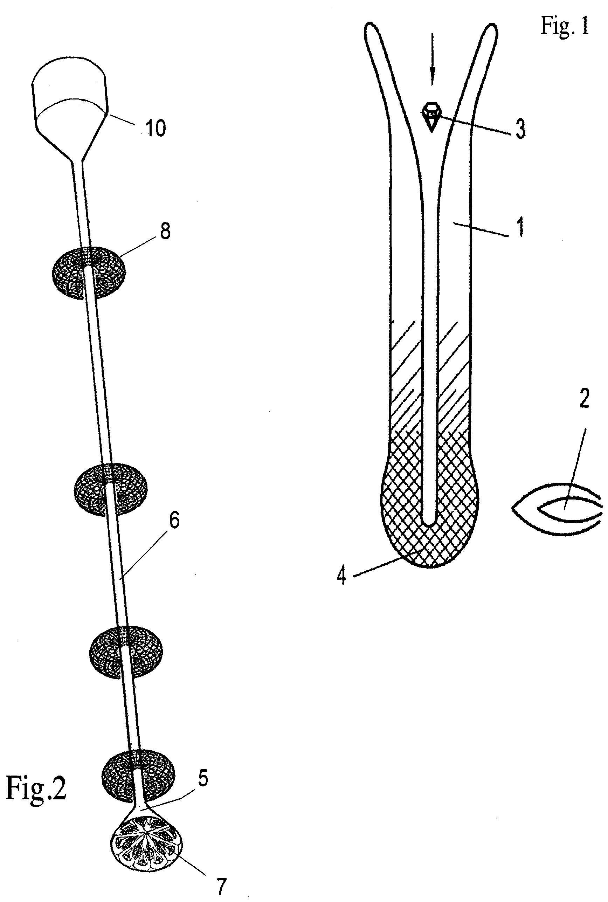

Fig 1 shows the common method as prior Art, taken from PCT/AT2006/000224, wherein a gemstone (3) is simply thrown into the glass tube (1) to be molten into its heated base (4). It is obvious that the position the gemstone would finally be in, must be be accidental and would not necessarily bear the desired effect.
Fig. 2 shows the means by which a defined positioning can be achieved:
   The end piece (5) of a suction canula (6) with an opening (7), milled in shape for a gem, can hold it in place, while the canula guided by Teflon clips or meshes (8) is inserted into the glass tube (1 in Fig. 1) unto its hilt (10).

## Claims

1. A method for the integration of gemstones in a glass attire, comprising the steps of holding the gemstone by a suction cannula, inserting the suction cannula into a half-molten glass tube and placing the gemstone vertically into the bottom of the half-molten glass tube, wherein the opening of the cannula is embossed or milled in shape of a part of the gemstone.

2. A method for the integration of gemstones in a glass attire as to claim 1, wherein the cannula is guided by elastic spreaders that fit between the cannula and the inner walls of the glass tube

3. A method for the integration of gemstones in a glass attire as to claim 2, comprising spacers of heat resistant plastic, e.g. of PTFE.

4. A method for the integration of gemstones in a glass attire as to claim 3, wherein the spacers are formed as two interleaved spirals.

5. A method for the integration of gemstones in a glass attire as to claim 3, wherein the spacers are formed as toroidal meshes.

6. A method for integration of gemstones in a glass attire according to any one of claims 1 to 5, wherein the melting point of the glass tube is below the desintegration temperature of the gem.

7. A system for the integration of gemstones in a glass attire, comprising a half-molten glass tube and a suction cannula configured for holding the gemstone, wherein the suction cannula is further configured for being inserted into the half-molten glass tube and configured for placing the gemstone vertically into the bottom of the half-molten glass tube, wherein the opening of the cannula is embossed or milled in shape of a part of the gemstone.

8. A system according to claim 7, further comprising elastic spreaders for guiding the cannula, wherein the elastic spreaders are configured to fit between the cannula and the inner walls of the glass tube.

9. A system according to claim 8, comprising spacers of heat resistant plastic, e.g. of PTFE.

10. A system according to claim 9, wherein the spacers are formed as two interleaved spirals.

11. A system according to claim 9, wherein the spacers are formed as toroidal meshes.

## Patentansprüche

1. Verfahren zur Integration von Edelsteinen in einem Glasschmuck, umfassend die Schritte Halten des Edelsteins durch eine Saugkanüle, Einführen der Saugkanüle in eine halbgeschmolzene Glasröhre und senkrechtes Einsetzen des Edelsteins in den Boden der halbgeschmolzenen Glasröhre, wobei die Öffnung der Kanüle in Form eines Teils des Edelsteins geprägt oder gefräst ist.

2. Verfahren zur Integration von Edelsteinen in einem Glasschmuck nach Anspruch 1, wobei die Kanüle durch elastische Spreizer geführt wird, die zwischen die Kanüle und die Innenwände des Glasrohrs passen.

3. Verfahren zur Integration von Edelsteinen in einem Glasschmuck nach Anspruch 2, umfassend Abstandshalter aus hitzebeständigem Kunststoff, z.B. aus PTFE.

4. Verfahren zur Integration von Edelsteinen in einem Glasschmuck nach Anspruch 3, wobei die Abstandshalter als zwei ineinander verschränkte Spiralen ausgebildet sind.

5. Verfahren zur Integration von Edelsteinen in einem Glasschmuck nach Anspruch 3, bei dem die Abstandshalter als toroidale Maschen ausgebildet sind.

6. Verfahren zur Integration von Edelsteinen in einem Glasschmuck nach einem der Ansprüche 1 bis 5, wobei der Schmelzpunkt des Glasrohrs unterhalb der Desintegrationstemperatur des Edelsteins liegt.

7. System zur Integration von Edelsteinen in einem Glasschmuck, umfassend eine halbgeschmolzene Glasröhre und eine Saugkanüle, die zum Halten des Edelsteins konfiguriert ist, wobei die Saugkanüle ferner so konfiguriert ist, dass sie in die halbgeschmolzene Glasröhre eingeführt werden kann und so konfiguriert ist, dass sie den Edelstein vertikal in den Boden des halbgeschmolzenen Glasrohrs platzieren kann, wobei die Öffnung der Kanüle in Form eines Teils des Edelsteins geprägt oder gefräst ist.

8. System nach Anspruch 7, ferner mit elastischen Spreizern zur Führung der Kanüle, wobei die elastischen Spreizer so gestaltet sind, dass sie zwischen die Kanüle und den Innenwänden des Glasrohrs passen.

9. System nach Anspruch 8, umfassend Abstandshalter aus hitzebeständigem Kunststoff, z.B. aus PTFE.

10. System nach Anspruch 9, wobei die Abstandshalter als zwei verschränkte Spiralen ausgebildet sind.

11. System nach Anspruch 9, bei dem die Abstandshalter als toroidale Maschen ausgebildet sind.

## Revendications

1. Procédé pour l'intégration de pierres précieuses dans une parure en verre, comprenant les étapes consistant à maintenir la pierre précieuse par l'intermédiaire d'une canule d'aspiration, insérer la canule d'aspiration dans un tube de verre semi-fondu et placer la pierre précieuse verticalement dans le fond du tube de verre semi-fondu, dans lequel l'ouverture de la canule est gaufrée ou fraisée sous la forme d'une partie de la pierre précieuse.

2. Procédé pour l'intégration de pierres précieuses dans une parure en verre selon la revendication 1, dans lequel la canule est guidée par des écarteurs élastiques qui s'ajustent entre la canule et les parois intérieures du tube de verre.

3. Procédé pour l'intégration de pierres précieuses dans une parure en verre selon la revendication 2, comprenant des entretoises en plastique thermorésistant, par exemple en PTFE.

4. Procédé pour l'intégration de pierres précieuses dans une parure en verre selon la revendication 3, dans lequel les entretoises sont formées sous la forme de deux spirales entrelacées.

5. Procédé pour l'intégration de pierres précieuses dans une parure en verre selon la revendication 3, dans lequel les entretoises sont formées sous la forme de mailles toroïdales.

6. Procédé pour l'intégration de pierres précieuses dans un parure en verre selon l'une quelconque des revendications 1 à 5, dans lequel le point de fusion du tube de verre est inférieur à la température de désintégration de la pierre précieuse.

7. Système pour l'intégration de pierres précieuses dans une parure en verre, comprenant un tube de verre semi-fondu et une canule d'aspiration configurée pour maintenir la pierre précieuse, dans lequel la canule d'aspiration est en outre configurée pour être insérée dans le tube de verre semi-fondu et configurée pour placer la pierre précieuse verticalement dans le fond du tube de verre semi-fondu, dans lequel l'ouverture de la canule est gaufrée ou fraisée sous la forme d'une partie de la pierre précieuse.

8. Système selon la revendication 7, comprenant en outre des écarteurs élastiques pour guider la canule, dans lequel les écarteurs élastiques sont configurés pour s'ajuster entre la canule et les parois internes du tube de verre.

9. Système selon la revendication 8, comprenant des entretoises en plastique thermorésistant, par exemple en PTFE.

10. Système selon la revendication 9, dans lequel les entretoises sont formées sous la forme de deux spirales entrelacées.

11. Système selon la revendication 9, dans lequel les entretoises sont formées sous la forme de mailles toroïdales.
